# EUROPEAN PATENT SPECIFICATION

(11) **EP 0 702 483 B1**
(45) Date of publication and mention of the grant of the patent: **01.03.2000**
(21) Application number: 95202482.6
(22) Date of filing: 13.09.1995
(51) Int. Cl.: H04N 1/48, G03C 7/30

(54) **Method of producing colour information from records of substantially the same hue**
Verfahren zur Erzeugung von Farbinformationen aus Aufzeichnungen vom im wesentlichen gleichen Farbton
Procédé pour l'obtention d'informations de couleur à partir d'enregistrements ayant substantiellement la même teinte

(30) Priority: 16.09.1994 GB 9418699; 06.04.1995 GB 9507103
(43) Date of publication of application: 20.03.1996
(73) Proprietor: KODAK LIMITED, Harrow, Middlesex HA1 4TY (GB); EASTMAN KODAK COMPANY, Rochester, New York 14650-2201 (US)
(72) Inventor: Lambert, Martyn Charles, Harrow, Middlesex, HA1 4TY (GB); Simons, Michael John, Harrow, Middlesex, HA1 4TY (GB); Taylor, Nicholas John, Harrow, Middlesex, HA1 4TY (GB)
(74) Representative: Nunney, Ronald Frederick Adolphe

(56) References cited:
- EP-A- 0 150 142
- EP-A- 0 169 966
- EP-A- 0 610 994

## Description

### Field of the Invention

The invention relates to the optoelectronic scanning of photographic images containing a fluorescent or luminescent light-emitting species.

### Background of the Invention

Schumann et al in U.S.Patent 4 543 308 describe the measurement of luminescence intensities in exposed and processed photographic film by means of a commercial emission spectrometer, utilising monochromators on both the illumination and detection sides of the instrument. Relying on differentials in luminescence from spectral sensitising dye, the preferred embodiment of Schumann et al, is unattractive, since luminescence intensities are limited. Increasing spectral sensitising dye concentrations beyond optimum levels is well recognised to desensitise silver halide emulsions.

Our copending European Application No 94200242.9 (EP-A-0 610 994) describes a colour photographic system which uses a colour film comprising red-, green-, and blue-sensitive silver halide emulsion layer units (without any dye image-forming materials) with at least one fluorescent interlayer between two of the colour-sensitive silver halide layer units which form silver images of substantially the same hue. The colour records are read out by scanning the image by transmission or reflection. As is well understood the fluorescent or luminescent layers need to be excited at a particular wavelength to stimulate the production of radiation at another wavelength. There is described a scanning process using a densitometer, with an absorption filter placed in the illuminating light path for fluorescent read-out.

### Problem to be Solved by the Invention

The problem encountered with this process is that the scans of the luminescent layers can pick up too much light of both lower and higher wavelengths, eg from the exciting radiation, leading to a degraded colour separation signal thus giving poor colour reproduction.

### Summary of the Invention

According to the present invention there is provided an image scanner for converting an optical image to electronic form comprising at least one exciting illumination source and at least one detector element for reading a record or records in a photographic film or paper having silver images of substantially the same hue but representing exposures in at least three regions of the visible spectrum and at least one fluorescent or luminescent layer located between two of said image layers, in which said exciting illumination is filtered through a filter and said fluorescent or luminescent emission is filtered through a reading filter before arriving at the detector element, the two filters being such that light passed by the illuminating filter is excluded by the reading filter, the mutual exclusion being defined by the requirement that, when graphical plots of optical density versus wavelength for the two filters are superimposed on the same scale in the wavelength region concerned, the absorption edge of the illuminating filter in said region and the absorption edge of the reading filter in said region cross at an optical density or absorbance of at least 0.20 above the mean minimum density in the pass-bands of the two filters.

### Advantageous Effect of the Invention

The present method obtains higher quality blue-, green- and red-light records leading to superior colour reproduction.

### Brief Description of the Drawings

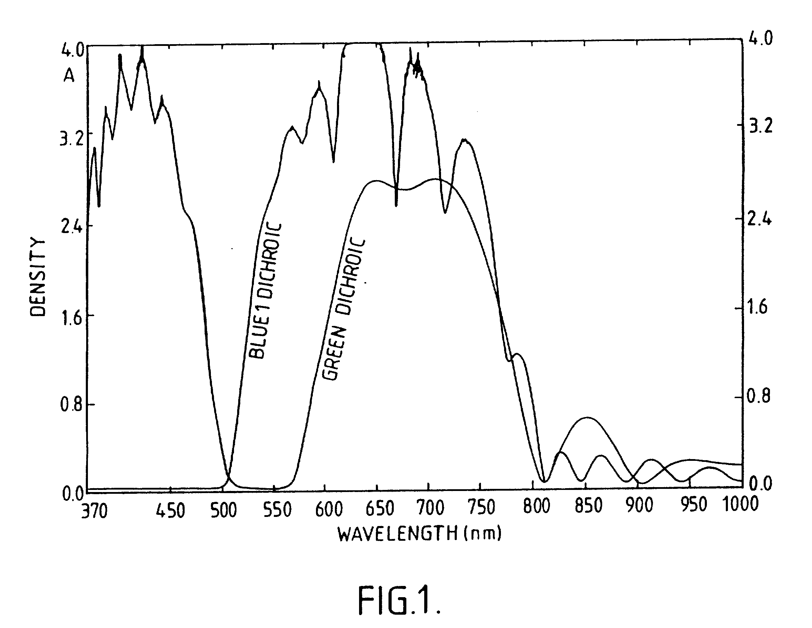

In the accompanying drawings Figs 1-4 are absorption curves of density vs. wavelength for various filters described in the specification.

### Detailed Description of the Invention

While a total density scan can be made with radiation transmitted through all layers of a photographic film, the readouts using a fluorescent or luminescent layer are conveniently made by reflection.

Conventional scanning techniques satisfying the requirements described above can be employed, including point-by-point, line-by-line and area scanning, and require no detailed description. A simple technique for scanning is to scan the photographically processed element point-by-point along a series of laterally offset parallel scan paths. The intensity of light reflected from or passing through the photographic element at a scanning point is noted by a sensor which converts radiation received into an electrical signal. The electrical signal is passed through an analogue to digital converter and sent to memory in a digital computer together with locant information required for pixel location within the image. Signal comparisons and mathematical operations to resolve scan records that represent combinations of two or three different images can be undertaken by routine procedures once the information obtained by scanning has been placed in the computer.

The preferred type of filter is an interference or dichroic filter. Such filters are preferred to absorption filters for blue and green filtration especially because they have a lower optical density in the pass band, and this is desirable because fluorescence images are of inherently lower intensity than diffuse reflection or transmission images read with a similar light source. Greater light availability allows faster or more accurate scanning. They also have a particularly sharp absorbance or transmittance edge, making the matching of filter combinations critical, and it has been found that for good results it is important that the absorbance edges of the illuminating and reading filters bear the mutual exclusion relationship described above.

In a preferred embodiment, the absorption edges cross at an optical density of at least 0.5 above the mean minimum densities, preferably at least 1.0 and particularly between 1.0 and 2.0 above the mean minimum densities.

In another preferred embodiment, an infra-red excluding absorption or interference filter, and optionally an ultraviolet-excluding filter, are added to the illuminating interference filter, or to the reading filter, or both.

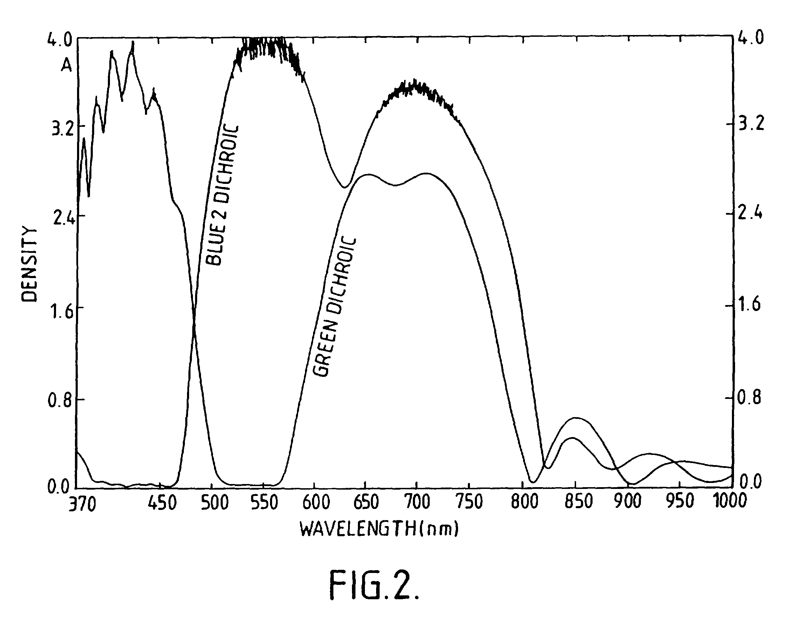

With reference to Fig 1 of the drawings, the wavelength region of concern is 450-550 nm (blue/green). In this region the long wavelength absorption edge of the illuminating filter and the short wavelength absorption edge of the reading filter cross at a very low density. In Fig 2, in contrast, the two curves cross at a density of about 1.5 thus falling within the scope of the present invention.

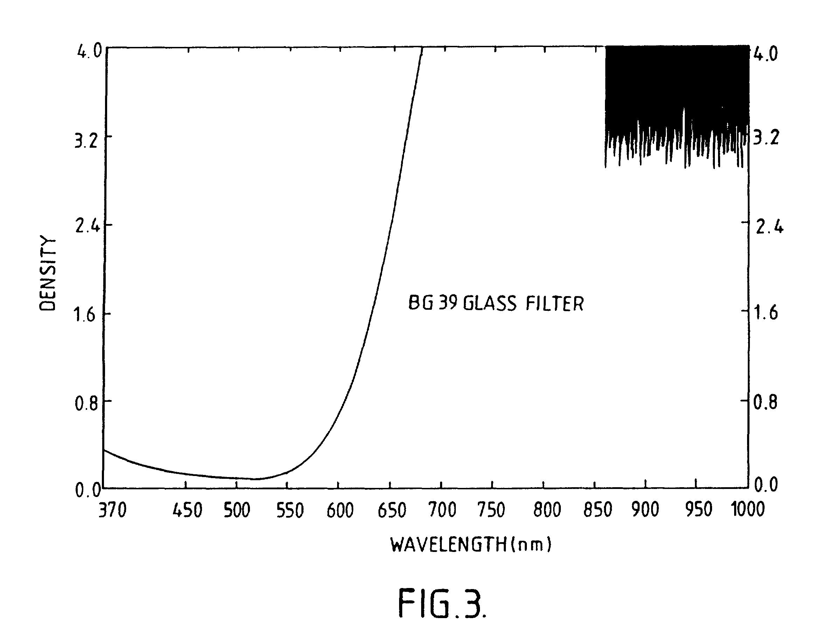

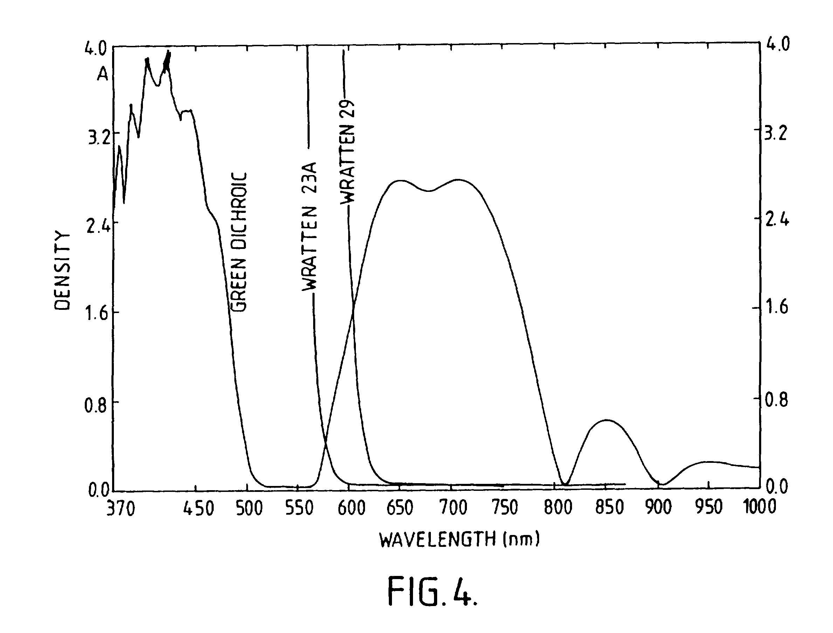

Fig 3 illustrates the absorption of a BG39 filter made by Schott Glasswerke which absorbs in the high red and infrared regions while Fig 4 illustrates two red filters KODAK™ WRATTEN™ 23a and 29 together with a green dichroic filter. The intersection of the long wavelength edge of the green filter and the absorption edge of the WRATTEN™ 23a filter is at a density of about 0.2, whereas the corresponding intersection with the WRATTEN™ 29 filter is at a density of about 2.6.

According to the present invention there is also provided a method for reading a colour record or records in a photographic material having silver images of substantially the same hue but representing exposures in at least three regions of the visible spectrum and at least one fluorescent or luminescent layer located between two of said image layers comprising scanning the exposed and processed photographic material at least three times to recover colour information,
at least one such scan measuring reflection density by employing an exciting illumination source for said fluorescent or luminescent layer and a detector element for the emission, in which said exciting illumination is filtered through an interference or dichroic filter, and said fluorescent or luminescent emission is filtered through a reading filter before arriving at the detector element, the two filters being such that light passed by the illuminating filter is excluded by the reading filter, the mutual exclusion being defined by the requirement that, when graphical plots of optical density versus wavelength for the two filters are superimposed on the same scale, in the wavelength region concerned, the long wavelength absorption edge of the illuminating filter and the short wavelength absorption edge of the reading filter cross at an optical density or absorbance of at least 0.20 above the mean minimum density in the pass-bands of the two filters,
and manipulating the results of the scans to provide three colour records.

A preferred sensitive photographic material to use in the present scanner comprises superimposed image-forming units sensitive to red, green and blue light carried on a support. These units contain silver halide emulsions, often of different photographic speeds, sensitive to the appropriate part of the visible spectrum. No dye-forming colour couplers are present. Typically the material is a film coated on transparent film base, in order, with red (R), green (G) and blue (B) sensitive emulsion layer units. Between the blue and green units is a fluorescent layer emitting in the green while between the green and red units is a fluorescent layer emitting in the red.

The multicolour photographic elements and their photographic processing, apart from the specific required features described above, can take any convenient conventional form. A summary of conventional photographic element features as well as their exposure and processing is contained in *Research Disclosure*, Vol. 308, December 1989, Item 308119, and a summary of tabular grain emulsion and photographic element features and their processing is contained in *Research Disclosure*, Vol. 225, December 1983, Item 22534, the disclosures of which are here incorporated by reference.

One method of generating the required three colour records comprises transmission scanning the entire film to obtain the total R, G and B densities, exciting the green fluorescent layer and reflection scanning through a green filter to obtain the B density, and exciting the red fluorescent layer and reflection scanning through a red filter to obtain the B & G densities. From these three measurements the R, G and B densities may be derived arithmetically.

The many possible film structures and reading methods are described in our copending EP Application No 94200242.9.

A variety of scanner designs may be used, but particularly convenient are scanners employing a linear or area photodiode array as the detector element.

Different types of light source may be used, including those providing a continuous spectrum, eg a tungsten, tungsten-halogen lamp or a xenon flash lamp or those providing spectral lines, eg a mercury lamp or those providing coherent radiation, eg a laser. The filter may be used to restrict the wavelengths of the continuous or spectral line emission. Use of a laser as the exciting radiation would probably not require a filter.

The following Example is included for a better understanding of the invention.

### EXAMPLE

A colour recording film having green and red fluorescent interlayers was prepared by coating the following layers in order on cellulose triacetate film base. The layers are described in terms of coated laydown of each component as grams per square metre (g/m²). All emulsions were sulphur-gold sensitised and spectrally sensitised to the appropriate part of the spectrum. The fluorescent dyes were conventionally dispersed in the presence of the coupler solvents tricresyl phosphate and diethyl lauramide for the red and green emitting dyes respectively. The silver halide emulsions used were of the tabular grain type except where otherwise stated, and were silver bromoiodide having between 1 and 6 mole % iodide.

| **Layer 1: antihalation underlayer** | |
|---|---|
| Gelatin | 1.0 g/m² |
| Antihalation dye | 0.08 |

(as a dispersion of solid dye. The dye was a neutral absorber dye which dissolved out of the coating when treated with alkaline processing solution).

| **Layer 2: red-sensitive layer** | |
|---|---|
| Gelatin | 1.7 |
| Fast red-sensitive emulsion, (grain diameter 3.0µm, thickness 0.12 µm) | 0.60 |
| Mid-speed red sensitised emulsion, (diameter 1.5µm, thickness 0.11 µm) | 0.23 |
| Slow red-sensitive emulsion, (diameter 0.7µm, thickness 0.11 µm) | 0.40 |
| Slow red-sensitive emulsion, (diameter 0.5µm, thickness 0.08 µm) | 0.40 |

| **Layer 3: interlayer** | |
|---|---|
| Gelatin, | 2.8 |
| Red-emitting fluorescent dye RF (RF was Lumogen™ F Red 300, supplied by BASF AG, and was a red coloured fluorescent dye with peak emission at 610 nm. dissolved as a 10% w/w solution in tricresyl phosphate, and the solution dispersed into aqueous gelatin solution). | 0.25 |
| Magenta absorber dye (as a dispersion of solid dye, which was soluble and hence dischargeable in alkaline processing solution). | 0.15 |

| **Layer 4: green-sensitive layer** | |
|---|---|
| Gelatin | 2.0 |
| Fast green-sensitive emulsion, (diameter 2.3 µm, thickness 0.12 µm) | 0.80 |
| Mid green-sensitive emulsion, (dia.1.5 µm, thickness 0.11 µm) | 0.25 |
| Slow green-sensitive emulsion, (diameter 0.7 µm, thickness 0.11 µm) | 0.40 |
| Slow green-sensitive emulsion (diameter 0.5 µm, thickness 0.08 µm) | 0.40 |

| **Layer 5: interlayer** | |
|---|---|
| Gelatin | 2.8 |
| Green-emitting fluorescent dye GF, (GF was Elbasol Fluorescent Brilliant Yellow R, supplied by Holliday Dyes and Chemicals Ltd, and was a yellow coloured fluorescent dye with peak emission at 501 nm. It was dissolved as a 5% w/w solution in diethyl lauramide, and the solution dispersed into aqueous gelatin solution). | 0.12 |
| Yellow filter dyes, (as dispersions of solid dye, which are soluble in alkaline processing solution). | 0.25 |

| **Layer 6: blue-sensitive layer** | |
|---|---|
| Gelatin | 1.8 |
| Fast blue-sensitive emulsion (non-tabular, approx. diameter 1.3µm) | 0.20 |
| Mid blue-sensitive emulsion, (diameter 1.39µm, thickness 0.11µm) | 0.17 |
| Slow blue-sensitive emulsion (diameter 0.72µm, thickness 0.084µm) | 0.27 |
| Slow blue-sensitive emulsion (diameter 0.32µm, thickness 0.072µm) | 0.27 |
| Hardener bis(vinylsulphonyl)methane | 0.23 |

| **Layer 7: supercoat** | |
|---|---|
| Gelatin | 1.0 |

Also present in every emulsion-containing layer was 4-hydroxy-6-methyl-1,3,3a,7-tetraazindene, sodium salt, at 1.5 g per mole of silver. Surfactants used to aid the coating operation are not listed in these examples.

Lumogen F Red 300 is described by the manufacturer as a perylene class fluorescent dye, and Elbasol Brilliant Yellow R is described by its manufacturer as a naphthalimide class fluorescent dye.

A sample of the film was sensitometrically exposed to blue light by passing light from a tungsten lamp through a Wratten 98 filter and through a graduated density step wedge. Another sample was sensitometrically exposed to white light by passing light from a tungsten lamp through a Daylight 5 filter and through a graduated density step wedge.

The film samples were developed for 3.5 minutes at 25°C in the following black-and-white developer solution:

| | |
|---|---|
| Sodium sulphite (anhydrous) | 80.0g/l |
| Tris(hydroxymethyl)aminomethane | 10.0g/l |
| L-Ascorbic acid | 8.0g/l |
| 4-hydroxymethyl-4-methyl-1-phenyl-3-pH adjusted to 8.2 with sulphuric acid | 0.25 g/l |

The film was then fixed in an aqueous solution of ammonium thiosulphate which also contained 25 g/l of sodium sulphite.

After washing and drying, the densities of the image steps on the test sample of the film were scanned by imaging an area of the film approximately 24 x 36 mm onto the focal plane of a Kodak™ DCS100 digital camera. The camera was fitted with a 100mm Nikkor™ macro lens, and an appropriate reading filter was placed in front of the lens and normal to the lens axis. This process was repeated on different areas of the film until all the density steps of the film had been scanned.

The film was illuminated by means of a photographic xenon flash unit placed on the same side of the film as the camera, so that the coated layers were on the same side of the film support as the incident light and the scanner lens. An appropriate interference filter was placed over the aperture of the flash unit.

The position of the flash units, and the lens aperture and sensitivity settings of the camera, were adjusted so that the range of light intensities sampled from the film fell within the sensitivity range of the camera.

The image data from the camera were loaded into Photostyler™ software installed on a Compaq Deskpro 486 personal computer. The average light intensity measured for each exposure step on the film was calculated and converted to an equivalent optical density (relative to the unexposed areas of the film which were arbitrarily defined to have a density of zero) by means of a previously determined intensity/density calibration curve, determined by relating the camera intensity values to separately determined transmission density values of a photographic step wedge.

Densities were measured for two sets of colour records: case A, in which the film had received a blue separation exposure, and where the green-emitting fluorescent layer was excited with blue light and the intensity of the emitted green light was measured to give a measure of the silver density in the blue sensitive layer, and case B, in which the film had received a white light exposure and where the red-emitting fluorescent layer was excited with green light, and the intensity of the emitted red light was measured to give a measure of the combined silver densities in the blue and green sensitive layers.

To scan the image densities in the film's blue-sensitive layer, two different blue interference (dichroic) filters were used on the illuminating xenon flash source, one, Bluel, supplied by L.O.T. Oriel Ltd. and having its longer wavelength absorption edge at about 500nm, and the other, Blue2, supplied by Balzers High Vacuum Ltd. and having its corresponding absorption edge at about 460nm. Each was used in combination with a BG39 glass absorption filter (from Schott Glaswerke) to exclude infrared and long wavelength red light. A green dichroic filter, supplied by L.O.T.Oriel Ltd., was placed over the camera lens. The absorbance spectrum of dichroic filter Blue1 with the spectrum of the green dichroic filter superimposed is shown in Figure 1, and the corresponding spectra for dichroic filter Blue2 and the green dichroic reading filter are shown in Figure 2. It will be seen that the absorption edge crossovers occur at density values of 0.1 and 1.5 respectively. The absorbance spectrum of the BG39 filter is shown in Figure 3.

In Table 1 are listed the relative log exposure given to each step on the film sample, and the corresponding image densities in the blue-sensitive layer as measured by the camera using the two filter conditions. It will be seen that the filter combination according to the Invention, Blue 2/Green Dichroic, gave substantially higher density values than the comparative filter combination, Blue 1/Green Dichroic, to give improved scanner discrimination over the density range of the film sample.

**TABLE 1**

| **Density Step** | **Rel.log Exposure** | **D measured, Blue 1/Green** | **D measured Blue 2/Green** |
|---|---|---|---|
| 1 | 0.0 | 0.000 | 0.000 |
| 2 | 0.2 | 0.026 | 0.019 |
| 3 | 0.4 | 0.031 | 0.026 |
| 4 | 0.6 | 0.047 | 0.044 |
| 5 | 0.8 | 0.075 | 0.069 |
| 6 | 1.0 | 0.124 | 0.123 |
| 7 | 1.2 | 0.168 | 0.186 |
| 8 | 1.4 | 0.195 | 0.233 |
| 9 | 1.6 | 0.225 | 0.265 |
| 10 | 1.8 | 0.289 | 0.341 |
| 11 | 2.0 | 0.310 | 0.344 |
| 12 | 2.2 | 0.392 | 0.496 |
| 13 | 2.4 | 0.460 | 0.580 |
| 14 | 2.6 | 0.504 | 0.706 |
| 15 | 2.8 | 0.552 | 0.798 |
| 16 | 3.0 | 0.561 | 0.970 |
| 17 | 3.2 | 0.606 | 1.024 |
| 18 | 3.4 | 0.621 | 1.118 |
| 19 | 3.6 | 0.678 | 1.158 |

To scan the combined image densities from the white light exposure in the film's blue- and green-sensitive layers, a green interference (dichroic) filter (supplied by Oriel) plus a BG39 glass filter plus an ultraviolet light-excluding Wratten 1B filter were used in combination on the illuminating xenon flash source. Two different reading filters were used in front of the scanner lens, a Wratten 23A absorption filter, and a Wratten 29 absorption filter.

The absorbance spectra of the reading filters together with that of the green dichroic illuminating filter superimposed are shown in Figure 4. It will be seen that the absorption edge crossovers occurred at density values of 0.4 and 1.7 respectively.

The densities measured by the camera for each exposure step (corresponding to the combined densities in the blue and green sensitive layers) are listed in Table 2.

**TABLE 2**

| **Density Step** | **Rel.log Exposure** | **D measured, Green/W23A** | **D measured, Green/W29** |
|---|---|---|---|
| 1 | 0.0 | 0.000 | 0.000 |
| 2 | 0.2 | 0.010 | 0.008 |
| 3 | 0.4 | 0.015 | 0.008 |
| 4 | 0.6 | 0.048 | 0.050 |
| 5 | 0.8 | 0.097 | 0.095 |
| 6 | 1.0 | 0.158 | 0.175 |
| 7 | 1.2 | 0.250 | 0.260 |
| 8 | 1.4 | 0.367 | 0.401 |
| 9 | 1.6 | 0.479 | 0.505 |
| 10 | 1.8 | 0.600 | 0.690 |
| 11 | 2.0 | 0.707 | 0.819 |
| 12 | 2.2 | 0.788 | 0.956 |
| 13 | 2.4 | 0.921 | 1.125 |
| 14 | 2.6 | 0.984 | 1.336 |
| 15 | 2.8 | 1.121 | 1.497 |
| 16 | 3.0 | 1.201 | 1.543 |
| 17 | 3.2 | 1.239 | 1.653 |
| 18 | 3.4 | 1.117 | 1.694 |
| 19 | 3.6 | 1.133 | 1.662 |

It will be seen that the preferred embodiment of the invention, the combination of a Wratten 29 and the green dichroic filters, maintained better density discrimination at high densities than the Wratten 23A /green dichroic combination.

## Claims

1. An image scanner for converting an optical image to electronic form comprising at least one exciting illumination source and at least one detector element for reading a record or records in a photographic film or paper having silver images of substantially the same hue but representing exposures in at least three regions of the visible spectrum and at least one fluorescent or luminescent layer located between two of said image layers, in which said exciting illumination is filtered through a filter, and said fluorescent or luminescent emission is filtered through a reading filter before arriving at the detector element, the two filters being such that light passed by the illuminating filter is excluded by the reading filter, the mutual exclusion being defined by the requirement that, when graphical plots of optical density versus wavelength for the two filters are superimposed on the same scale in the wavelength region concerned, the absorption edge of the illuminating filter in said region and the absorption edge of the reading filter in said region cross at an optical density or absorbance of at least 0.20 above the mean minimum density in the pass-bands of the two filters.

2. A scanner as claimed in claim 1 in which the two absorption curves cross at a density between 0.5 and 2.0.

3. A scanner as claimed in claim 1 or 2 which has a second exciting illumination source of a different wavelength from the first.

4. A scanner as claimed in any of claims 1-3 in which the exciting illumination source or the reading device is also filtered with an additional filter absorbing radiation of a wavelength above 600 nm.

5. A scanner as claimed in any of claims 1-4 in which the exciting illumination source or the reading device is also filtered with a UV-absorbing filter.

6. A scanner as claimed in any of claims 1-5 which has illumination means for making a transmission scan.

7. A method for reading a colour record or records in a photographic material having silver images of substantially the same hue but representing exposures in at least three regions of the visible spectrum and at least one fluorescent or luminescent layer located between two of said image layers comprising scanning the exposed and processed photographic material at least three times to recover colour information,
at least one such scan measuring reflection density by employing an exciting illumination source for said fluorescent or luminescent layer and a detector element for the emission, in which said exciting illumination is filtered through a filter, and said fluorescent or luminescent emission is filtered through a reading filter before arriving at the detector element, the two filters being such that light passed by the illuminating filter is excluded by the reading filter, the mutual exclusion being defined by the requirement that, when graphical plots of optical density versus wavelength for the two filters are superimposed on the same scale, in the wavelength region concerned, the absorption edge of the illuminating filter in said region and the absorption edge of the reading filter in said region cross at an optical density or absorbance of at least 0.20 above the mean minimum density in the pass-bands of the two filters,
and manipulating the results of the scans to provide three colour records.

8. A method for reading a colour record as claimed in claim 7 in which the scanner is a scanner of any of claims 1-6.

9. A method for reading a colour record as claimed in any of claims 7-8 in which the photographic material has three silver halide layer units sensitive respectively to red, green and blue light with a green-emitting fluorescent layer between the blue- and green-sensitive layer units and a red-emitting fluorescent layer between the green- and red-sensitive layers.

10. A method for reading a colour record as claimed in claim 9 in which the scans performed are:
a transmission density scan to determine the total silver density,
a reflection scan by exciting the green fluorescent layer and reading through a green filter, and
a reflection scan by exciting the red fluorescent layer and reading through a red filter.

## Patentansprüche

1. Bildscanner zum Umwandeln eines optischen Bildes in ein elektronisches Bild mit mindestens einer Anregungslichtquelle und mindestens einem Detektorelement zum Lesen einer oder mehrerer Aufzeichnungen in einem fotografischen Film oder Papier, die Silberbilder von im wesentlichen gleichem Farbton aufweisen, aber Belichtungen in mindestens drei Bereichen des sichtbaren Spektrums darstellen, mit mindestens einer zwischen zwei der Bildschichten liegenden fluoreszierenden oder lumineszierenden Schicht, wobei im Bildscanner das Anregungslicht durch ein Filter gefiltert wird und die fluoreszierende oder lumineszierende Emission vor Erreichen des Detektorelements durch ein Lesefilter gefiltert wird, wobei die beiden Filter derart ausgebildet sind, daß das vom Lichtfilter durchgelassene Licht vom Lesefilter ausgeschlossen wird, und wobei der gegenseitige Ausschluß durch die Forderung definiert ist, daß die Absorptionskante des Lichtfilters und die Absorptionskante des Lesefilters in dem betreffenden Wellenlängen-Bereich sich bei einer optischen Dichte oder einem Absorptionsvermögen von mindestens 0,20 über der mittleren Mindestdichte in den Durchlaßbereichen der beiden Filter überschneiden, wenn grafische Darstellungen der optischen Dichte über der Wellenlänge für die beiden Filter im betreffenden Wellenlängenbereich auf der gleichen Skala überlagert werden.

2. Bildscanner nach Anspruch 1, dadurch gekennzeichnet, daß sich die beiden Absorptionskurven bei einer Dichte zwischen 0,5 und 2,0 überschneiden.

3. Bildscanner nach Anspruch 1 oder 2, gekennzeichnet durch eine zweite Anregungslichtquelle mit gegenüber der ersten unterschiedlicher Wellenlänge.

4. Bildscanner nach einem der Ansprüche 1 - 3, dadurch gekennzeichnet, daß die Anregungslichtquelle oder die Lesevorrichtung auch mit einem zusätzlichen Filter, welches Strahlung einer Wellenlänge über 600 nm absorbiert, gefiltert wird.

5. Bildscanner nach einem der Ansprüche 1 - 4, dadurch gekennzeichnet, daß die Anregungslichtquelle oder die Lesevorrichtung auch mit einem UV-Strahlung absorbierenden Filter gefiltert wird.

6. Bildscanner nach einem der Ansprüche 1 - 5, gekennzeichnet durch Beleuchtungsmittel zur Durchführung einer Durchleuchtungsabtastung.

7. Verfahren zum Lesen einer oder mehrerer Farbaufzeichnungen in einem fotografischen Material, welche Silberbilder von im wesentlichen gleichem Farbton aufweisen, die aber Belichtungen in mindestens drei Bereichen des sichtbaren Spektrums darstellen, und mit mindestens einer zwischen zwei der Bildschichten liegenden fluoreszierenden oder lumineszierenden Schicht, wobei das Verfahren folgende Schritte umfaßt:
- mindestens dreimaliges Abtasten des belichteten und entwickelten fotografischen Materials, um Farbinformation zu gewinnen,
- Messen der Reflexionsdichte bei mindestens einer Abtastung durch Verwendung einer Anregungslichtquelle für die fluoreszierende oder lumineszierende Schicht und eines Detektorelements für die Emission, wobei das Anregungslicht durch ein Filter gefiltert wird und die fluoreszierende oder lumineszierende Emission vor Erreichen des Detektorelements durch ein Lesefilter gefiltert wird, wobei die beiden Filter derart ausgebildet sind, daß das vom Lichtfilter durchgelassene Licht vom Lesefilter ausgeschlossen wird, und wobei der gegenseitige Ausschluß durch die Forderung definiert ist, daß die Absorptionskante des Lichtfilters und die Absorptionskante des Lesefilters in dem betreffenden Wellenlängen-Bereich sich bei einer optischen Dichte oder einem Absorptionsvermögen von mindestens 0,20 über der mittleren Mindestdichte in den Durchlaßbereichen der beiden Filter überschneiden, wenn grafische Darstellungen der optischen Dichte über der Wellenlänge für die beiden Filter im betreffenden Wellenlängenbereich auf der gleichen Skala überlagert werden, und
- Manipulieren der Abtastergebnisse, um drei Farbaufzeichnungen zu erhalten.

8. Verfahren nach Anspruch 7, dadurch gekennzeichnet, daß der Scanner einer der in den Ansprüchen 1 - 6 beanspruchten Scanner ist.

9. Verfahren nach Anspruch 7 oder 8, dadurch gekennzeichnet, daß das fotografische Material drei Silberhalogenidschichten aufweist, welche für rot, grün bzw. blau empfindlich sind, wobei eine grün-emittierende fluoreszierende Schicht zwischen den blau- und grünempfindlichen Schichten und eine rot-emittierende fluoreszierende Schicht zwischen den grün- und rotempfindlichen Schichten vorgesehen ist.

10. Verfahren nach Anspruch 9, gekennzeichnet durch folgende Abtastungen:
- eine Durchlassdichte-Abtastung, um die Gesamtsilberdichte zu bestimmen,
- eine Reflexionsabtastung durch Anregen der grün-emittierenden fluoreszierenden Schicht und Lesen durch ein Grünfilter, und
- eine Reflexionsabtastung durch Anregen der rot-emittierenden fluoreszierenden Schicht und Lesen durch ein Rotfilter.

## Revendications

1. Dispositif de balayage d'image permettant de convertir une image optique en une image électronique comprenant au moins une source d'éclairement excitatrice et au moins un élément détecteur permettant de lire un ou des enregistrement(s) dans un film ou un papier photographique comprenant des images argentiques ayant pratiquement la même teinte mais représentant des expositions dans au moins trois régions du spectre visible et au moins une couche fluorescente ou luminescente placée entre deux desdites couches imagées, dans lequel ledit éclairement d'excitation est filtré à travers un filtre d'éclairement et ladite émission fluorescente ou luminescente est filtrée à travers un filtre de lecture avant de parvenir à l'élément détecteur, les deux filtres étant tels que la lumière traversant le filtre d'éclairement est exclue par le filtre de lecture, l'exclusion mutuelle étant définie par le fait que, lorsque l'on superpose les courbes graphiques de la densité optique en fonction de la longueur d'onde des deux filtres sur la même échelle, dans la région de longueur d'onde concernée, l'arête d'absorption du filtre d'éclairement dans ladite région et l'arête d'absorption du filtre de lecture dans ladite région se croisent à une densité optique ou à une absorbance d'au moins 0,20 au-dessus de la densité minimum moyenne des bandes passantes des deux filtres.

2. Dispositif de balayage selon la revendication 1, dans lequel les deux courbes d'absorption se croisent à une densité comprise entre 0,5 et 2,0.

3. Dispositif de balayage selon la revendication 1 ou 2 qui comprend une seconde source d'éclairement excitatrice d'une longueur d'onde différente de la première.

4. Dispositif de balayage selon l'une quelconque des revendications 1 à 3, dans lequel la source d'éclairement excitatrice ou le dispositif de lecture est également filtré(e) au moyen d'un filtre supplémentaire absorbant le rayonnement d'une longueur d'onde supérieure à 600 nm.

5. Dispositif de balayage selon l'une quelconque des revendications 1 à 4, dans lequel la source d'éclairement excitatrice ou le dispositif de lecture est également filtré(e) au moyen d'un filtre absorbant dans l'UV.

6. Dispositif de balayage selon l'une quelconque des revendications 1 à 5 qui comprend des moyens d'éclairement permettant de générer un balayage par transmission.

7. Procédé de lecture d'un ou de plusieurs enregistrement(s) dans un produit photographique comprenant des images argentiques ayant pratiquement la même teinte mais représentant des expositions dans au moins trois régions du spectre visible et au moins une couche fluorescente ou luminescente placée entre deux desdites couches imagées, ledit procédé consistant à balayer au moins trois fois le produit photographique exposé et traité pour récupérer les informations colorées,
l'un des balayages au moins mesurant la densité par réflexion en utilisant une source d'éclairement excitatrice pour ladite couche fluorescente ou luminescente et un élément détecteur pour l'émission, dans lequel ledit éclairement d'excitation est filtré à travers un filtre et ladite émission fluorescente ou luminescente est filtrée à travers un filtre de lecture avant de parvenir jusqu'à l'élément détecteur, les deux filtres étant tels que la lumière traversant le filtre d'éclairement est exclue par le filtre de lecture, l'exclusion mutuelle étant définie par le fait que, lorsque l'on superpose les courbes graphiques de la densité optique en fonction de la longueur d'onde des deux filtres sur la même échelle, dans la région de longueur d'onde concernée, l'arête d'absorption du filtre d'éclairement dans ladite région et l'arête d'absorption du filtre de lecture dans ladite région se croisent à une densité optique ou à une absorbance d'au moins 0,20 au-dessus de la densité minimum moyenne des bandes passantes des deux filtres,
et où l'on manipule les résultats des balayages pour obtenir les trois enregistrements chromogènes.

8. Procédé de lecture d'un enregistrement chromogène selon la revendication 7, dans lequel le dispositif de balayage est tel que défini dans l'une quelconque des revendications 1 à 6.

9. Procédé de lecture d'un enregistrement chromogène selon l'une quelconque des revendications 7-8, dans lequel le produit photographique comprend trois unités de couches aux halogénures d'argent sensibles respectivement à la lumière rouge, verte et bleue, une couche fluorescente émettant dans le vert étant placée entre les unités de couches sensibles au bleu et au vert et une couche fluorescente émettant dans le rouge étant placée entre les couches sensibles au vert et au rouge.

10. Procédé de lecture d'un enregistrement chromogène selon la revendication 9, dans lequel les balayages mis en oeuvre sont :
un balayage de la densité par transmission pour déterminer la densité argentique totale,
un balayage par réflexion en excitant la couche fluorescente verte et en lisant à travers un filtre vert, et
un balayage par réflexion en excitant la couche fluorescente rouge et en lisant à travers un filtre rouge.
